Europäisches Patentamt

European Patent Office

Office européen des brevets

(11) Veröffentlichungsnummer: **0 401 557**
**A2**

## (12) EUROPÄISCHE PATENTANMELDUNG

(21) Anmeldenummer: **90109142.1**

(22) Anmeldetag: **15.05.90**

(51) Int. Cl.5: **H04L 27/10, H04B 10/14**

(30) Priorität: **06.06.89 DE 3918473**

(43) Veröffentlichungstag der Anmeldung:
**12.12.90 Patentblatt 90/50**

(84) Benannte Vertragsstaaten:
**DE FR GB NL**

(71) Anmelder: **Siemens Aktiengesellschaft
Wittelsbacherplatz 2
D-8000 München 2(DE)**

(72) Erfinder: **Meissner, Eckhard, Dipl.-Ing.
Böglstrasse 2
D-8000 München 83(DE)**

(54) Verfahren zur Realisierung eines phasen- oder/und polarisationsunempfindlichen Überlagerungsempfangs für ein FSK-moduliertes Sendesignal.

(57)    2.1 Es wird für FSK-modulierte optische Sendesignale bei Verwendung einer gegenüber einer Datenrate der Sendesignale sehr kleinen Zwischenfrequenz ein einfaches Verfahren zur Realisierung eines phasen- oder/und polarisationsunempfindlichen optischen Überlagerungsempfangs für ein solches Signal angegeben.

2.2 Dazu wird bei jedem Takt des Sendesignals (S) die Phase dieses Signals (S) am Anfang (A1) und in der Mitte (M) der Taktzeit (T) dieses Taktes zwischen 0° oder 90° oder/und die Polarisation dieses Signals (S) zumindest am Anfang (A2) des zweiten und am Anfang (A4) des vierten Viertels dieser Taktzeit (T) zwischen zwei zueinander orthogonalen Polarisationszuständen umgetastet und aus dem auf diese Weise umgetasteten Signal (S) in einem einfachen optischen ilberlagerungsempfänger (ÜE) für FSK-modulierte Sendesignale (S) das phasen- oder/und polarisationsunabhängige Ausgangssignal (AS) des Empfängers (ÜE) gewonnen.

2.3 Optischer Überlagerungsempfang

FIG 1

EP 0 401 557 A2

## Verfahren zur Realisierung eines phasen- oder/und polarisationsunempfindlichen optischen Überlagerungsempfangs für ein FSK-moduliertes Sendesignal

Die Erfindung betrifft ein Verfahren zur Realisierung eines phasen- oder/und polarisationsunempfindlichen optischen Überlagerungsempfangs für ein FSK-moduliertes Sendesignal nach dem Oberbegriff des Patentanspruchs 1.

Beim optischen Überlagerungsempfang, bei dem ein zugeführtes optisches Sendesignal mit einem optischen Lokaloszillatorsignal und aus den überlagerten optischen Signalen das Ausgangssignal des Empfängers abgeleitet wird, hängt die Empfängerempfindlichkeit im allgemeinen von einer Differenz zwischen Polarisationszuständen und Phasen des Sendesignals und des Lokaloszillatorsignals ab. Stimmen die Polarisationszustände von Sende- und Lokaloszillatorsignal nicht überein, treten Empfindlichkeitsverluste beim Empfang auf. Bei Verwendung einer niedrigen Zwischenfrequenz, die gegenüber der vom Sendesignal übertragenen Datenrate um ein oder mehrere Größenordnungen kleiner ist, wechseln außerdem die einander überlagerten optischen Signale periodisch zwischen einer Kophasal- und einer Quadraturkomponente.

Für einen polarisationsunempfindlichen Empfang können bekannte Polarisations-Quadratur-Empfänger (polarisation diversity receiver) verwendet werden, bei denen das Sendesignal in zwei zueinander orthogonale Polarisationszustände aufgeteilt und diese getrennt empfangen und elektrisch addiert werden.

Für einen phasenunempfindlichen Empfang können bekannte Phasen-Quadratur-Empfänger (phase diversity receiver) verwendet werden, bei denen die Kophasal- und Quadraturkomponenten getrennt empfangen und elektrisch addiert werden.

Diese bekannten Empfänger benötigen ein 90°-Hybrid, das bei optischen Systemen nur schwer realisierbar ist, und überdies sind zwei oder vier optische Überlagerungsempfänger erforderlich.

Phasen- oder/und polarisationsunempfindlicher Empfang könnte auch durch eine Phasen- oder/und Polarisationsregelung erreicht werden, doch sind solche Regelungen sehr aufwendig.

Aufgabe der Erfindung ist es, für FSK-modulierte Sendesignale bei Verwendung einer gegenüber einer Datenrate dieser Signale sehr kleinen Zwischenfrequenz ein einfaches Verfahren zur Realisierung eines phasen- oder/und polarisationsunempfindlichen optischen Überlagerungsempfangs für ein solches Signal anzugeben.

Diese Aufgabe wird mit einem Verfahren nach dem Oberbegriff des Patentanspruchs 1 gelöst, das die im kennzeichnenden Teil des Patentanspruchs 1, des Patentanspruchs 2 oder des Patentanspruchs 3 angegebenen Merkmale aufweist und auf einer datensynchronen Phasenumtastung oder sinusförmigen Phasenmodulation (letztere bekannt aus Proceedings of the ECOC 1988, Part II, S. 65-68) oder/und einer datensynchronen Polarisationsumtastung des Sendesignals beruht.

Bei einem Verfahren nach Anspruch 1 oder 2 werden unabhängig voneinander phasenunempfindlicher Empfang durch die Phasenumtastung und polarisationsunempfindlicher Empfang durch die Polarisationsumtastung erreicht. Wird beides zugleich vorgenommen, wird phasen- und polarisationsunempfindlicher Empfang erhalten.

Bevorzugte Ausgestaltungen eines Verfahren nach Anspruch 1 oder 2 gehen aus den Ansprüchen 4 und 5 hervor.

Das Verfahren nach Anspruch 3 bewirkt phasenunempfindlichen Empfang. Durch die in Anspruch 6 angegebene Weiterbildung dieses Verfahrens nach Anspruch 3 kann zudem auch polarisationsunempfindlicher Empfang erreicht werden.

Das Verfahren nach Anspruch 6 kann auch nach Maßgabe des Anspruchs 7 ausgeführt werden.

Daß bei den erfindungsgemäßen Verfahren der Empfang phasen-oder/und polarisationsunempfindlich ist, d.h., daß das Ausgangssignal des Empfängers phasen- oder/und polarisationsunabhängig ist, kann mathematisch gezeigt werden.

Eine besonders vorteilhafte Vorrichtung zur Durchführung eines erfindungsgemäßen Verfahrens ist im Anspruch 8 angegeben, woraus auch ein großer Vorteil der Erfindung erkennbar ist, nach welchem zur Durchführung des Verfahrens nur ein einfacher, herkömmlicher optischer Überlagerungsempfänger erforderlich ist.

Die Erfindung wird anhand der Figuren in der nachfolgenden Beschreibung beispielhaft näher erläutert. Es zeigen:

Figur 1 eine schematische Darstellung einer Vorrichtung zur Durchführung eines erfindungsgemäßen Verfahrens mit einem optischen Überlagerungsempfänger und einem vorgeschalteten Phasenumtastteil,

Figur 2 Taktfolgen über der Zeit t, die den das Sendesignal taktenden Takt und dazu synchronisierte Takte zur Steuerung eines Umtastteiles repräsentieren,

Figur 3 ein Phasen- und Polarisationsumtastteil, das anstelle des Phasenumtastteils nach Figur 1 verwendbar ist,

Figur 4 ein anderes Phasen- und Polarisationsumtastteil, das anstelle des Umtastteils nach Figur 1 oder 3 verwendbar ist,

Figur 5 Taktfolgen über der Zeit t, die ähnlich wie in Figur 2 den das Sendesignal taktenden Takt und dazu synchronisierte Takte zur Steuerung des Umtastteils nach Figur 4 repräsentieren,

Figur 6 ein weiteres Phasen- und Polarisationsumtastteil, das anstelle der Umtastteile nach den Figuren 1, 3 oder 4 verwendbar ist,

Figur 7 in einem Zeitdiagramm ähnlich denen nach Figur 2 und Figur 5 den das Sendesignal taktenden Takt, ein dazu synchronisiertes sinusförmiges Steuersignal und einen dazu synchronisierten Takt zur Steuerung des Umtastteils nach Figur 6,

Figur 8 ein Beispiel, bei dem ein Polarisationsumschalter des Unterteils zwischen dem Lokaloszillator und der optischen Einrichtung zum Überlagern des Sendesignals und Lokaloszillatorsignals angeordnet ist,

Figur 9 ein Beispiel, bei dem sowohl ein Phasenumschalter als auch ein Polarisationsumschalter zwischen der genannten optischen Einrichtung und dem Lokaloszillator angeordnet ist, und

Figur 10 ein Beispiel, bei dem ein Phasenumschalter zwischen der genannten optischen Einrichtung und dem Lokaloszillator und ein Polarisationsumschalter senderseitig angeordnet ist.

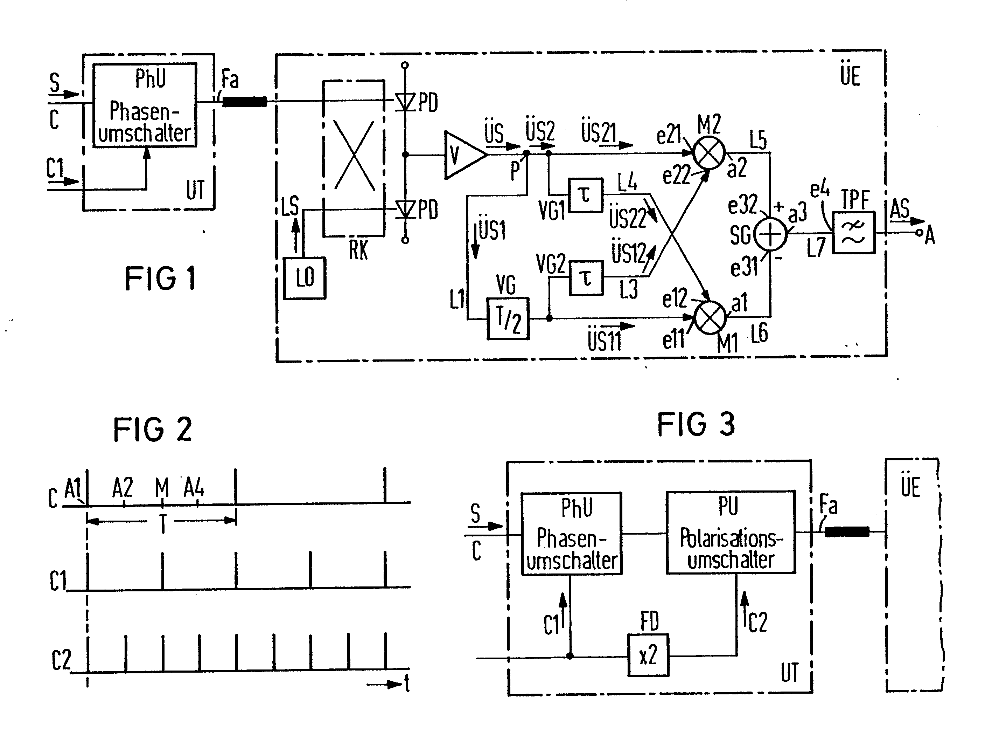

Die Vorrichtung nach Figur 1 besteht im wesentlichen aus dem optischen Überlagerungsempfänger ÜE und dem vorgeschalteten Umtastteil UT, das beispielsweise einen Phasenumschalter PhU aufweist. Bei dieser Vorrichtung wird das beispielsweise durch eine Lichtleitfaser Fa geführte, z.B. linear polarisierte und mit dem Takt der Takt folge C nach Figur 2 getaktete Sendesignal S dem Phasenumschalter PhU zugeleitet, in welchem die Phase dieses Signals 5 mit der zur Taktfolge C synchronisierten und die doppelte Taktfrequenz wie diese aufweisenden Taktfolge CI nach Figur 2 jeweils am Anfang AI und in der Mitte M der Taktzeit T jedes Taktes der Taktfolge C zwischen 0° und 90° umgetastet.

Die Taktfolge CI kann beispielsweise durch Frequenzverdoppelung in einem Frequenzverdoppler FD aus der Taktfolge C abgeleitet werden.

Das in der angegebenen Weise phasenumgetastete Sendesignal S wird einem optischen Richtkoppler RK des optischen Überlagerungsempfängers ÜE zugeleitet, in welchem dieses Signal S mit einem von einem Lokaloszillator LO dieses Empfängers ÜE abgegebenen, z.B. linear polarisierten optischen Lokaloszillatorsignal LS überlagert wird.

Aus den einander überlagerten optischen Signalen S und LS wird nach einer an sich bekannten optoelektrischen Wandlung in einem beispielsweise einen oder zwei Photodetektoren PD und einen nachgeschalteten elektrischen Verstärker V enthaltenden optoelektrischen Wandler OEW ein elektrisches Überlagerungssignal ÜS erzeugt, das ein Zwischenfrequenzsignal mit einer im Vergleich zur Taktfrequenz der das Sendesignal 5 taktenden Taktfolge sehr kleinen, d.h. um eine oder mehrere Größenordnungen wie diese Taktfrequenz kleineren Zwischenfrequenz enthält.

Das Überlagerungssignal ÜS wird dem Verzweigungspunkt P zugeführt, von dem zwei elektrische Leitungen L1 und L2 abzweigen, in denen jeweils ein erster bzw. zweiter Signalanteil ÜS1 bzw. ÜS2 des Überlagerungssignals ÜS geführt werden. Die Leitung L1 führt über ein den in ihr geführten Signalanteil ÜS1 um die Hälfte T/2 der Taktzeit T der Taktfolge C verzögerndes Verzögerungsglied VG zu einem Eingang ell eines Misch- oder Multipliziergliedes M1, während die Leitung L2 direkt zu einem Eingang e21 eines anderen Misch- oder Multipliziergliedes M2 führt. Von der Leitung L1 zweigt zwischen dem einen Eingang ell des einen Multipliziergliedes M1 und dem Verzögerungsglied VG eine Leitung L3 ab, die über ein um eine kurze Zeitspanne $\tau$ verzögerndes Verzögerungsglied VG1 zu einem anderen Eingang e22 des anderen Multipliziergliedes M2 führt. Ebenso zweigt von der Leitung L2 eine Leitung L4 ab, die über ein um die kurze Zeitspanne $\tau$ verzögerndes Verzögerungsglied VG2 zu einem anderen Eingang e12 des einen Multipliziergliedes M1 führt.

Durch diese Verknüpfung wird dem einen Eingang ell des einen Multipliziergliedes M1 ein erster Anteil ÜS11 des um T/2 verzögerten ersten Signalanteils ÜS1 und dem einen Eingang e21 des anderen Multipliziergliedes M2 ein ersters Anteil ÜS21 des zweiten Signalanteils ÜS2 des Überlagerungssignals ÜS zugeführt. Dem anderen Eingang e12 bzw. e22 des einen bzw. anderen Multipliziergliedes M1 bzw. M2 wird ein zweiter Anteil ÜS12 bzw. ÜS22 des um T/2 verzögerten ersten bzw. verzögerten zweiten Signalanteils ÜS1 bzw. ÜS2 um die kurze Zeitspanne $\tau$ verzögert zugeführt, die um eine oder mehrere Größenordnungen kleiner als die Taktzeit T zu wählen ist.

Ein Ausgang a1 des einen Multipliziergliedes M1 ist mit einem Eingang e31 eines Summiergliedes SG verbunden. Ein Ausgang a2 des anderen Multipliziergliedes M2 ist mit einem anderen Eingang e32 des Summiergliedes SG verbunden.

Ein Ausgang a3 des Summiergliedes SG ist mit einem Eingang a4 eines Tiefpaßfilters TPF verbunden, an dem an einem Ausgang A das Ausgangssignal AS des Überlagerungsempfängers ÜE entnehmbar ist. Dieses Ausgangssignal AS ist unabhängig von der Phase des Sendesignals S und proportional zur Differenz der an den Ausgängen a1 bzs. a2 des einen bzw. anderen Multipliziergliedes M1 bzw. M2 entnehmbaren Produkte (siehe dazu Electronics Lett. 24 (1988) No. 9, S. 567-568).

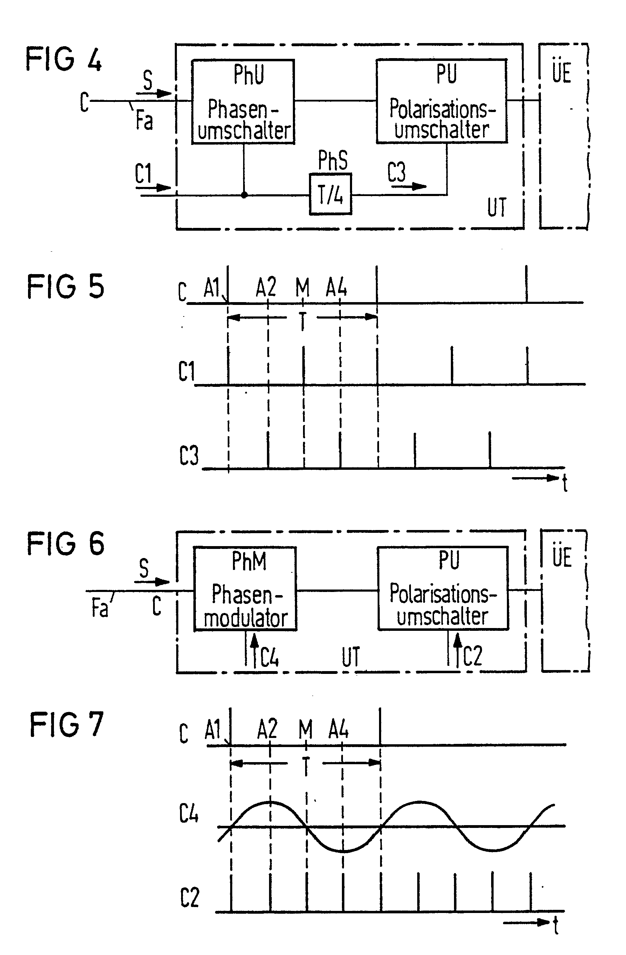

Ein von der Polarisation des Sendesignals S unabhängiges Ausgangssignal AS erhält man, wenn bei der Vorrichtung nach Figur 1 anstelle des Phasenumschalters PhU ein Polarisationsumschalter verwendet wird. Ein sowohl von der Phase als auch von der Polarisation des Sendesignals S unabhängiges Ausgangssignal AS erhält man, wenn bei der Vorrichtung nach Figur 1 ein Umtastteil UT verwendet wird, das sowohl einen Phasenumschalter als auch einen Polarisationsumschalter aufweist, die in beliebiger Reihenfolge hintereinander angeordnet sein können. Beispiels weise können die Umtastteile UT nach den Figuren 3 und 4 verwendet werden.

Bei dem Umtastteil UT nach Figur 3 wird der Phasenumschalter PhU mit der Taktfolge C1 nach Figur 2 und der Phasenumschalter PU mit der zur Taktfolge C und C1 synchronen Taktfolge C2, die aus der Taktfolge C1 durch Frequenzverdoppelung in einem Frequenzverdoppler FD gewonnen werden kann, umgeschaltet. Dadurch wird die Phase des Sendesignals 5 am Anfang A1 und in der Mitte M jeder Taktzeit T zwischen 0° und 90° und die Polarisation des Sendesignals S am Anfang A1, A2, M und A4 jedes Viertels der Taktzeit T zwischen zwei zueinander orthogonalen Polarisationszuständen umgetastet.

Ebenso könnte bei dem Umtastteil nach Figur 3 der Phasenumschalter PhU mit der Takt folge G2 und der Phasenumschalter PU mit der Taktfolge C1 umgeschaltet werden.

Das Umtastteil UT nach Figur 4 unterscheidet sich von dem Umtastteil UT nach Figur 3 im wesentlichen dadurch, daß der Polarisationsumschalter PU nicht mit der Taktfolge C2 nach Figur 2 sondern mit der zur Taktfolge C und C1 synchronen Taktfolge C3 nach Figur 5 umgetastet wird. Die Taktfolge C3 hat die gleiche Frequenz wie die Taktfolge C1, ist aber gegenüber dieser um ein Viertel der Taktzeit T phasenverschoben. Die Taktfolge C3 kann durch Phasenverschiebung der Taktfolge C1 und T/4 in einem Phasenschieber PhS gewonnen werden. Im Unterschied zum Umtastteil UT nach Figur 3 wird nach dem Umtastteil UT nach Figur 4 die Polarisation des Sendesignals S jeweils am Anfang A2 des zweiten und am Anfang A4 des vierten Viertels der Taktzeit T zwischen zwei zueinander orthogonalen Polarisationszuständen umgetastet. Auch in diesem Fall könnte ebensogut der Phasenumschalter PhU mit der Taktfolge C3 und der Polarisationsumschalter PU mit der Taktfolge C1 umgeschaltet werden.

Anstelle des Phasenumschalters PhU nach den Figuren 1, 3 und 4 kann auch ein Phasenmodulator PhM verwendet werden, der mit einem zur Taktfolge C synchronisierten sinusförmigen Steuersignal C4 nach Figur 7 angesteuert ist, wobei dieses Steuersignal C4 oder/und der Phasenmodulator PhM so bemessen sind, daß die Phase des Sendesignals 5 mit einer Amplitude von 70,2° sinusförmig moduliert wird und die Nulldurchgänge dieser sinusförmigen Modulation am Anfang A1 und in der Mitte M der Taktzeit T liegen. Das Umtastteil nach Figur 6 ist ein Beispiel für ein Umtastteil UT mit einem solchen Phasenmodulator PhM, wobei durch den mit der Taktfolge C2 oder auch der Taktfolge C3 umgeschalteten zusätzlichen Polarisationsumschalter PU ein Ausgangssignal AS erhalten wird, das sowohl von der Phase als auch von der Polarisation des Sendesignals S unabhängig ist.

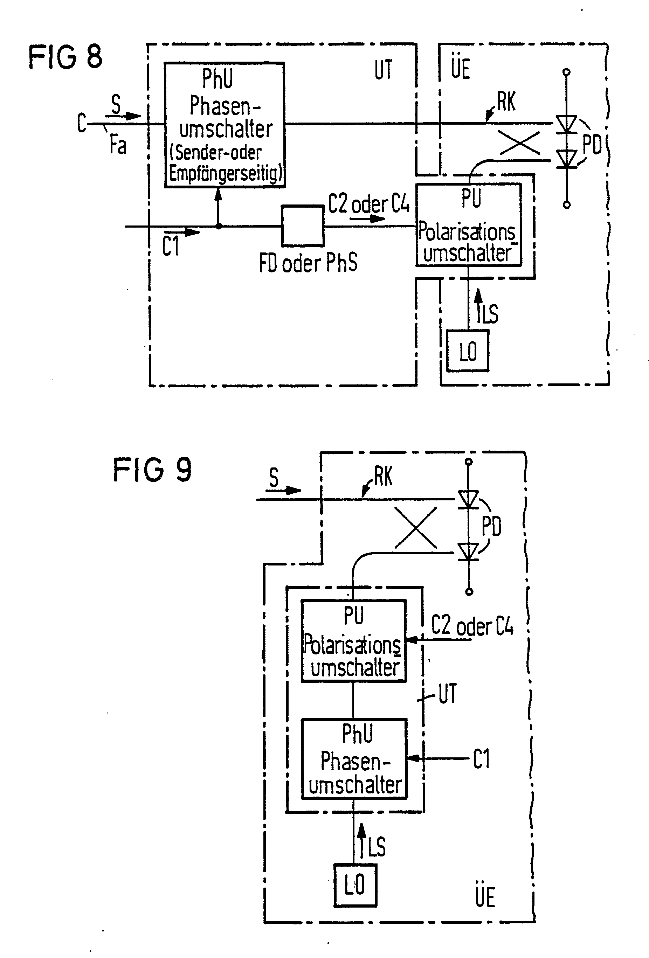

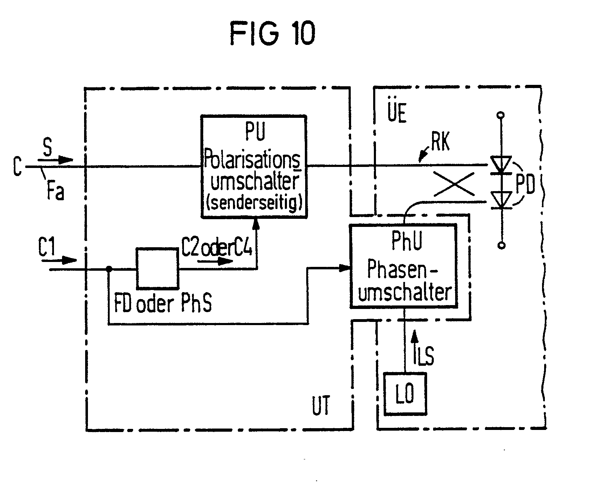

Die Phasenumtastung oder auch die Phasenmodulation können senderseitig oder auch empfängerseitig, z.B. unmittelbar vor dem Empfänger oder nach dem Lokaloszillator, durchgeführt werden. Die Polarisationsumtastung kann senderseitig oder empfängerseitig nach dem Lokaloszillator durchgeführt werden. In diesem Zusammenhang zeigt das Beispiel nach Figur 8 einen Fall, bei dem der Polarisationsumschalter PU des Umtastteils UT den Polarisationszustand des Lokaloszillators LS anstelle des Sendesignals S umtastet. Der Phasenumschalter PhU tastet dagegen sender- oder empfängerseitig die Phase des Sendesignals S um. Beim Beispiel nach Figur 9 wird nur das Lokaloszillatorsignal LS und nicht das Sendesignal S in der Phase und Polarisation umgetastet. Beim Beispiel nach Figur 10 wird dagegen die Phase des Lokaloszillatorsignals LS umgetastet, während die Polarisation des Sendesignals senderseitig umgetastet wird. Bei den Beispielen nach den Figuren 8 bis 10 kann der Phasenumschalter PhU durch einen sinusförmig steuerbaren Phasenmodulator PhM ersetzt werden, der dann mit dem sinusförmigen Steuersignal C4 nach Figur 7 anzusteuern ist. Beim Beispiel nach Figur 9 kann auch der Phasenumschalter PhU mit der Taktfolge C2 oder C4 und der Polarisationsumschalter mit der Taktfolge C1 getaktet werden.

## Ansprüche

1. Verfahren zur Realisierung eines phasen- oder/und polarisationsunempfindlichen optischen Überlagerungsempfangs für ein FSK-moduliertes optisches Sendesignal (S), wobei durch Überlagern des Sendesignals (S) mit einem optischen Lokaloszillatorsignal (LS) und durch optoelektrische Wandlung ein elektrisches Überlagerungssignal (ÜS) erzeugt und aus diesem durch Tiefpaßfilterung ein Ausgangssignal (AS) gewonnen wird, **dadurch gekennzeichnet,** daß bei jedem Takt des Sendesignals (S) die Phase dieses Signals (S) oder des Lokaloszillatorsignals (LS) am Anfang (A1) und in der Mitte (M) der Taktzeit (T) dieses Taktes zwischen 0° und 90° umgetastet wird oder/und daß bei jedem Takt des Sendesignals (S) die Polarisation dieses Signals (S) oder des Lokaloszillatorsignals (LS) zumindest am Anfang (A2) des zweiten und am Anfang (A4) des vierten Viertels dieser Taktzeit (T) zwischen zwei zueinander orthogonalen Polarisationszuständen umgetastet wird, daß von dem Überlagerungssignal (ÜS) ein erster Signalanteil (ÜS1) gegenüber einem zweiten Signalanteil (ÜS2) dieses Signals (ÜS) um die Hälfte (T/2) der Taktzeit (T) verzögert wird, daß ein erster Anteil (ÜS11) des verzögerten ersten Signalanteils (ÜS1) und ein gegenüber dem zweiten Signalanteil (ÜS2) um eine kurze Zeitspanne (τ) verzögerter erster Anteil (ÜS21) dieses zweiten Signalanteils (ÜS2) miteinander multipliziert werden, daß ein zweiter Anteil (ÜS21) des zweiten Signalanteils (ÜS2) und ein gegenüber dem verzögerten ersten Signalanteil (ÜS1) um eine kurze Zeitspanne (τ) verzögerter zweiter Anteil (ÜS12) dieses ersten Signalanteils (ÜS1) miteinander multipliziert werden, und daß die miteinander multiplizierten ersten und zweiten Anteile (ÜS11, ÜS21; ÜS12, ÜS22) summiert und tiefpaßgefiltert werden.

2. Verfahren zur Realisierung eines phasen-oder/und polarisationsunempfindlichen optischen Oberlagerungsempfangs für ein FSK-moduliertes optisches Sendesignal (S), wobei durch Überlagern des Sendesignals (S) mit einem optischen Lokaloszillatorsignal (LS) und durch optoelektrische Wandlung ein elektri sches Überlagerungssignal (ÜS) erzeugt und aus diesem durch Tiefpaßfilterung ein Ausgangssignal (AS) gewonnen wird, **dadurch gekennzeichnet**, daß bei jedem Takt des Sendesignals (S) die Phase dieses Signals (S) oder des Lokaloszillatorsignals (LS) zumindest am Anfang (A2) des zweiten und am Anfang (A4) des vierten Viertels der Taktzeit (T) dieses Taktes zwischen 0° und 90° umgetastet wird oder/und daß bei jedem Takt des Sendesignals (S) die Polarisation dieses Signals (S) oder des Lokaloszillatorsignals (LS) am Anfang (A1) und in der Mitte (M) dieser Taktzeit (T) zwischen zwei zueinander orthogonalen Polarisationszuständen umgetastet wird, daß von dem Überlagerungssignal (ÜS) ein erster Signalanteil (ÜS1) gegenüber einem zweiten Signalanteil (ÜS2) dieses Signals (ÜS) um die Hälfte (T/2) der Taktzeit (T) verzögert wird, daß ein erster Anteil (ÜS11) des verzögerten ersten signalanteils (ÜS1) und ein gegenüber dem zweiten Signalanteil (ÜS2) um eine kurze Zeitspanne (τ) verzögerter erster Anteil (ÜS21) dieses zweiten Signalanteils (ÜS2) miteinander multipliziert werden, daß ein zweiter Anteil (ÜS21) des zweiten Signalanteils (ÜS2) und ein gegenüber dem verzögerten ersten Signalanteil (ÜS1) um eine kurze Zeitspanne (τ) verzögerter zweiter Anteil (ÜS12) dieses ersten Signalanteils (ÜS1) miteinander multipliziert werden, und daß die miteinander multiplizierten ersten und zweiten Anteile (ÜS11, ÜS21; ÜS12, ÜS22) summiert und tiefpaßgefiltert werden.

3. Verfahren zur Realisierung eines phasenunempfindlichen optischen Oberlagerungsempfangs für ein FSK-moduliertes optisches Sendesignals (S), wobei durch Überlagern des Sendesignals (S) mit einem optischen Lokaloszillatorsignal (L5) und durch optoelektrische Wandlung ein elektrisches Überlagerungssignal (ÜS) erzeugt und aus diesem durch Tiefpaßfilterung ein Ausgangssignal (AS) gewonnen wird, **dadurch gekennzeichnet,** daß bei jedem Takt des Sendesignals (S) die Phase dieses Signals (S) oder des Lokaloszillatorsignals (LS) derart mit einer Amplitude von 70,2° sinusförmig moduliert wird, daß die Nulldurchgänge des Sinus am Anfang (A1) und in der Mitte (M) der Taktzeit (T) dieses Taktes liegen, daß von dem Überlagerungssignal (ÜS) ein erster Signalanteil (ÜS1) gegenüber einem zweiten Signalanteil (ÜS2) dieses Signals (ÜS) um die Hälfte (T/2) der Taktzeit (T) verzögert wird, daß ein erster Anteil (ÜS11) des verzögerten ersten Signalanteils (ÜS1) und ein gegenüber dem zweiten Signalanteil (ÜS2) um eine kurze Zeitspanne (τ) verzögerter erster Anteil (ÜS21) dieses zweiten Signalanteils (ÜS2) miteinander multipliziert werden, daß ein zweiter Anteil (ÜS21) des zweiten Signalanteils (ÜS2) und ein gegenüber dem verzögerten ersten Signalanteil (ÜS1) um eine kurze Zeitspanne (τ) verzögerter zweiter Anteil (ÜS12) dieses ersten Signalanteils (US1) miteinander multipliziert werden, und daß die miteinander multiplizierten ersten und zweiten Anteile (ÜS11, ÜS21; ÜS12, ÜS22) summiert und tiefpaßgefiltert werden.

4. Verfahren nach Anspruch 1, **dadurch gekennzeichnet,** daß die Polarisation des Sendesignals (S) oder des Lokaloszillatorsignals (LS) am Anfang (A1, A2, M, A4) jedes Viertels der Taktzeit (T) zwischen zwei zueinander orthogonalen Polarisationszuständen umgetastet wird.

5. Verfahren nach Anspruch 2, **dadurch gekennzeichnet,** daß die Phase des Sendesignals (S) oder des Lokaloszillatorsignals (LS) am Anfang (A1, A2, M, A4) jedes Viertels der Taktzeit (T) zwischen 0° und 90° umgetastet wird.

6. Verfahren nach Anspruch 3 zur Realisierung eines phasen-und polarisationsunempfindlichen optischen Überlagerungsempfangs für ein FSK-moduliertes Sendesignal (S), **dadurch gekennzeichnet,** daß die Polarisation des Sendesignals (S) oder des Lokaloszillatorsignals (LS) am Anfang (A2) des zweiten und am Anfang (A4) des vierten Viertels der Taktzeit (T) zwischen zwei zueinander orthogonalen Polarisationszuständen umgetastet wird.

7. Verfahren nach Anspruch 6, **dadurch gekennzeichnet,** daß die Polarisation des Sende signals (S) oder des Lokaloszillatorsignasl (LS) am Anfang (A1, A2, M, A4) jedes Viertels der Taktzeit (T) umgetastet wird.

8. Vorrichtung zur Durchführung eines Verfahrens nach einem der vorhergehenden Ansprüche, **gekennzeichnet durch**

- einen taktbaren Phasenumschalter (PhU) oder sinusförmig steuerbaren Phasenmodulator (PhM) zum Umtasten oder sinusförmigen Modulieren der Phase des Sendesignals (S) oder des Lokaloszillatorsignals (LS), oder/ und

- einen taktbaren Polarisationsumschalter (PU) zum Umtasten der Polarisation des Sendesignals (S) oder des Lokaloszillatorsignals (LS), und

- einen optischen Überlagerungsempfänger (ÜE) mit einer optischen Einrichtung (RK) zum Überlagern des optischen Sendesignals (S) und Lokaloszillatorsignals (LS), einer optoelektrischen Wandlereinrichtung (OEW) zur Umwandlung der beiden überlagerten optischen Signale (S, LS) in das elektrische Überlagerungssignal, einem Verzweigungspunkt (P), dem das Überlagerungssignal (ÜS) zugeleitet ist, einem um die Hälfte (T/2) der Taktzeit (T) verzögernden Verzögerungsglied (VG), zwei Multipliziergliedern (M1, M2), zwei jeweils um die kurze Zeitspanne ($\tau$) verzögernden Verzögerungsgliedern (VG1, VG2), einem Summierglied (SG) und einem Tiefpaßfilter (TPF),

- wobei der Verzweigungspunkt (P) einerseits über das um die Hälfte (T/2) der Taktzeit (T) verzögernde Verzögerungsglied (VG) mit einem Eingang (e11) eines (M1) der beiden Multiplizierglieder (M1, M2) und andererseits direkt mit einem Eingang (e21) des anderen Multipliziergliedes (M2) verbunden ist, wobei der eine Eingang (e11, e21) jedes Multipliziergliedes (M1, M2) über jeweils eines der beiden um die kurze Zeitspanne ($\tau$) verzögernden Verzögerungsgliedes (VG1, VG2) mit einem anderen Eingang (e12, e22) des jeweils anderen Multipliziergliedes (M2 bzw. M1) verbunden ist, wobei Ausgänge (a1, a2) der beiden Multiplizierglieder (M1, M2) mit Eingängen (e31, e32) des Summiergliedes (SG) verbunden sind, und wobei ein Ausgang (a3) des Summiergliedes (SG) mit einem Eingang (e) des Tiefpaßfilters (TPF) verbunden ist.

FIG 1

FIG 2

FIG 3

FIG 4

S
C →
Fa

┌─────────────────────────────────────────────┐ ┌──────┐
│  ┌────────────────┐        ┌────────────────┐ │ │ ÜE  │
│  │     PhU        │        │      PU        │ │ │      │
│  │  Phasen-       │────────│ Polarisations- │ │ │      │
│  │  umschalter    │        │  umschalter    │ │ │      │
│  └────────────────┘        └────────────────┘ │ │      │
│                    PhS       C3                │ │      │
C1 →                 ┌────┐    →                 │ │      │
│  ─────────────●────│ T/4│──────                │ │      │
│                    └────┘           UT         │ │      │
└─────────────────────────────────────────────┘ └──────┘

FIG 5

C  | A1 | A2  M  A4 |
C1
C3

    |←———— T ————→|

                            →  t

FIG 6

S →
Fa' C →

┌─────────────────────────────────────────────┐ ┌──────┐
│  ┌────────────────┐        ┌────────────────┐ │ │ ÜE  │
│  │     PhM        │        │      PU        │ │ │      │
│  │  Phasen-       │────────│ Polarisations- │ │ │      │
│  │  modulator     │        │  umschalter    │ │ │      │
│  └────────────────┘        └────────────────┘ │ │      │
│         ↑ C4            UT          ↑ C2        │ │      │
└─────────────────────────────────────────────┘ └──────┘

FIG 7

C  | A1 | A2  M  A4 |
C4
C2

    |←———— T ————→|

                            →  t

**FIG 8**

**FIG 9**

# FIG 10